# EUROPÄISCHE PATENTSCHRIFT

(11) **EP 1 275 532 B1**
(45) Veröffentlichungstag und Bekanntmachung des Hinweises auf die Patenterteilung: **03.01.2007**
(21) Anmeldenummer: 02012974.8
(22) Anmeldetag: 12.06.2002
(51) Int. Cl.: B60C 29/00, B60C 5/12, B60C 23/04

(54) **Reifenventilanordnung für ein Fahrzeugluftreifen mit Notlaufschlauch**
Tire valve for tire with runflat-tube
Valve de gonflage pour un pneumatique comprenant une chambre à air pour roulage à plat

(30) Priorität: 09.07.2001 DE 10132528
(43) Veröffentlichungstag der Anmeldung: 15.01.2003
(73) Patentinhaber: Continental Aktiengesellschaft, 30165 Hannover (DE)
(72) Erfinder: Doerr, Alfons, Dr., 30163 Hannover (DE); Asendorf, Klaus, 27318 Hoya/Weser (DE)

(56) Entgegenhaltungen:
- GB-A- 585 682
- GB-A- 965 892
- GB-A- 986 784
- US-A- 3 480 064

## Beschreibung

Die Erfindung betrifft eine Reifenventilanordnung für ein Fahrzeugluftreifen mit Notlaufschlauch gemäß dem Oberbegriff des Patentanspruch 1 und ein Fahrzeugreifen mit einer derartigen Reifenventilanordnung.

Fahrzeugluftreifen mit luftgefüllten Notlaufschläuchen, wie sie beispielsweise aus der DE 25 09 939 A1 bekannt sind, dienen dazu, bei plötzlichem oder schleichendem Druckluftverlust im Fahrzeugluftreifen zumindest einen Notlaufzustand zu gewährleisten, worunter verstanden wird, dass das Fahrzeug bei plötzlichem Druckluftverlust aus einem Gefahrenbereich herausfahren kann. Die luftgefüllten Notlaufschläuche bieten gegenüber anderen bekannten Notlaufsystemen, welche ohne Luftdruck arbeiten, den Vorteil, dass auch im Notlauffall ein gewisser Federungskomfort erhalten bleibt. Vorteilhaft an diesen Lösungen ist auch, dass sich die Gewichtszunahme des Rades durch den luftgefüllten Notlaufschlauch in erträglichen Grenzen hält. Der Notlaufschlauch und der Fahrzeugreifen weisen voneinander unabhängigen Luftzuleitungen auf, die in der Regel auch durch unabhängige Ventilsysteme geschlossen bzw. mit Luft befüllt werden können.

Es sind eine Reihe von Lösungen bekannt, bei denen Fahrzeugreifen und Notlaufschlauch jeweils ein separates Ventil aufweisen, welche jeweils eine eigene Öffnung in der Felge bedingen. Dies wird allgemein als unerwünscht angesehen, da die Zahl der Felgendurchbrechungen möglichst gering gehalten werden soll, da derartige Durchbrechungen aufwendig abgedichtet werden müssen und eine potentielle Ursache für Luftdruckverluste darstellen.

Es sind bereits Vorschläge für Ventilanordnungen gemacht worden, bei denen eine einzige Öffnung in der Felge zum Einführen von Luft in den Notlaufschlauch wie in das Reifeninnere genutzt wird.

In der GB-A-986 784 wird eine gattungsgemäße Ventilanordnung beschrieben.

In der US 4,765,358 wird eine gattungsgemäße Ventilanordnung beschrieben, bei der ein einziger Ventileinsatz in einem längsverschieblichen Ventilschaft je nach Lage des Schaftes im Ventilkörper dazu dient, entweder gleichzeitig den Notlaufschlauch und den Fahrzeugluftreifen mit Luft zu befüllen, oder nur den Fahrzeugluftreifen aufzupumpen. Beschrieben wird dort aber nicht die Möglichkeit, erst den Notlaufschlauch und dann den Fahrzeugluftreifen aufzupumpen.

Diese Reihenfolge ist aber von Bedeutung. Denn es ist wichtig, erst den Notlaufschlauch mit Luft zu befüllen, da bei umgekehrter Befüllreihenfolge der Innendruck des Schlauches nicht über den Druck im Fahrzeugluftreifen angehoben werden kann. Ein erhöhter Innendruck des Notlaufschlauchs gegenüber dem Fahrzeugluft ist notwendig, damit der Notlaufschlauch fest an die Felge gepresst wird, was zur Vermeidung von Unwuchten wichtig ist.

Ferner ist es von großer Bedeutung, dass der Fahrzeugluftreifen mit einem exakt vorbestimmten Luftdruck betrieben wird. Bei der aus der US 4,765,358 bekannten Lösung erscheint es fraglich, ob die Befüllung des Notlaufschlauches bei gleichzeitiger Befüllung des Fahrzeugluftreifens gewährleistet, dass der Fahrzeugluftreifen mit einem bestimmten Luftdruck befüllt wird, und es erscheint ferner fraglich, ob gewährleistet ist, dass der Innendruck im Fahrzeugluftreifen zu einer Erhöhung des Innendrucks im Notlaufschlauch führt. Bei plötzlichem Luftdruckverlust im Fahrzeugreifen muß aber gewährleistet sein, dass der Notlaufschlauch durch Verringerung des Umgebungsdrucks expandieren kann um seine Wirkung zu entfalten. Außerdem würde ein gleichzeitiges oder nachfolgendes Befüllen des Notlaufschlauchs den Innendruck des Luftreifens unkontrollierbar beeinflussen. Daher ist es wichtig, dass der Luftreifen erst nach erfolgtem Befüllen des Notlaufschlauchs mit Luft aufgepumpt wird, da nur so ein exakter Luftdruck im Fahrzeugluftreifen gewährleistet ist.

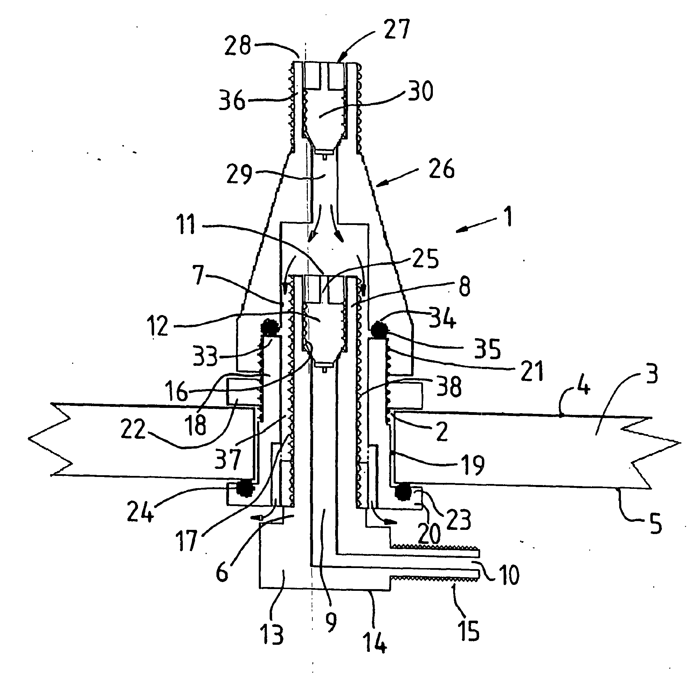

In der US 3,480,064 ist mit Bezug auf die dortigen Figuren 7 und 8 eine Ventilanordnung beschrieben worden, bei welcher sich in einem Ventilschaft zwei in Reihe angeordnete Ventileinsätze befinden, wobei jeder Ventileinsatz dem separaten Befüllen des Fahrzeugluftreifens bzw. des Notlaufschlauchs dient. Hierbei befindet sich der Ventileinsatz des Notlaufschlauches im Inneren des Ventilschaftes; beweglich über ihm ist der Ventileinsatz des Fahrzeugluftreifens angeordnet, wobei nur der Ventileinsatz des Fahrzeugluftreifens mit einem Druckluftanschluss verbindbar ist. Durch ein Bajonettverschluss des Ventileinsatzes des Fahrzeugluftreifens lässt sich der Ventileinsatz des Fahrzeugluftreifens in seiner Lage zum Ventileinsatz des Notlaufschlauches verändern. Wird der Ventileinsatz des Fahrzeugluftreifens nach unten zum Ventileinsatz des Notlaufschlauches hinbewegt, wird der Ventilstift des Ventileinsatzes des Notlaufschlauches betätigt, wodurch über den Ventileinsatz des Fahrzeugluftreifens Luft durch das Ventil des Notlaufschlauches in diesen einleitbar ist. Wird der Ventileinsatz des Fahrzeugluftreifens wieder vom Ventileinsatz des Notlaufschlauches weg bewegt, schließt des Ventil des Notlaufschlauches, wodurch nur noch Luft in den Fahrzeugluftreifen eingeführt werden kann.

Problematisch hierbei ist, dass eine mit der Befüllung des Reifens beauftragte Person willkürlich entscheiden kann, ob sie Luft in den Notlaufschlauch und/oder den Fahrzeugluftreifen nachfüllen oder sogar ablassen kann.

Dies stellt aber ebenfalls ein Problem dar, da ein Ablassen von Luft aus dem Notlaufschlauch auf jeden Fall vermieden werden muss. Außerdem ist bei dieser Lösung auch nicht gewährleistet, dass der Luftdruck exakt beizubehalten ist. Ferner erscheint bei der aus der US 3,480,064 bekannten Lösung die Abdichtung des teleskopartig im Ventilkörper beweglichen Ventileinsatzes des Fahrzeugluftreifens auf Dauer problematisch zu sein. Ferner stellt eine derartige Anordnung eine Gefahrenquelle für Verschmutzungen dar.

Eine weitere gattungsgemäße Lösung ist schließlich aus der GB 965,892 mit Bezug auf die dortige Figur 2 bekannt. Hier ist ein Ventileinsatz für den Notlaufschlauch in das untere, die Felge durchbrechende Ende eines hohlzylindrischen Ventilkörpers eingesetzt. Ein Ventileinsatz zur Befüllung des Fahrzeugluftreifens ist in einem separaten Ventilgehäuse angeordnet und auf einen Schaft des Ventilkörpers verschraubt, wobei der Ventileinsatz in den hohlzylindrischen Ventilkörper hineinragt. Der Ventileinsatz des Fahrzeugluftreifens kann hierbei den Ventileinsatz des Notlaufschlauches nicht mechanisch beeinflussen, da hier der Ventileinsatz des Fahrzeugluftreifens stets vom Ventileinsatz des Notlaufschlauchs beabstandet ist. Der Ventileinsatz des Notlaufschlauchs unterscheidet sich aber von üblichen Ventileinsätzen gemäß DIN 7757 durch eine pneumatische Betätigung des Ventils bei Beaufschlagung des Ventileinsatzes mit einem vorgegebenen Luftdruck, d.h. die Betätigung des Ventils erfolgt nicht mechanisch. Die Befüllung zunächst des Notlaufschlauchs und anschließend des Fahrzeugluftreifens soll gemäß der GB 965,892 nämlich dadurch erfolgen, dass durch den Ventileinsatz des Fahrzeugluftreifens eingespeiste Luft erst durch den Ventileinsatz des Notlaufschlauches strömt und den Notlaufschlauch mit Luft füllt. Wenn ein bestimmter, vorgegebener Luftdruck im Notlaufschlauch erreicht ist, soll das Ventil schließen und sich nicht mehr öffnen lassen. Weiter durch das Reifenventil einströmende Luft soll dann durch entsprechende Leitungen in den Fahrzeugluftreifen strömen. Das Öffnen und Schließen des Ventileinsatzes des Notlaufschlauches ist also luftdruckabhängig.

Hier besteht die Gefahr, dass durch Toleranzen oder Ermüdungen der Schließfeder des Ventileinsatzes des Notlaufschlauchs die Luftdrücke insbesondere des Notlaufschlauchs nicht mehr korrekt beibehalten werden. Denn wenn im normalen Betriebszustand ausschließlich der Fahrzeugluftreifen, nicht aber der Notlaufschlauch mit Luft befüllt werden soll, wirkt bei diesen Nachfülloperationen stets Luftdruck auch auf das Ventil des Notlaufschlauches ein, wodurch es ausgelöst werden kann. Hierdurch kann es zu unerwünschten Luftdruckschwankungen gerade im Notlaufschlauch kommen; ferner ist dort nicht gewährleistet, dass die Luftdruckunterschiede im Notlaufschlauch bzw. im Fahrzeugluftreifen derart sind, dass der Luftdruck des Fahrzeugluftreifens eine Luftdruckerhöhung im Notlaufschlauch bewirkt.

Ausgehend von dem zitierten bekannten Stand der Technik hat sich der Erfinder die Aufgabe gestellt, eine Ventilanordnung der eingangs geschilderten Art dahingehend zu verbessern, dass mit einer derarten Ventilanordnung die korrekte Befüllungreihenfolge eingehalten wird, und dass im Betriebszustand des Reifens das Ventil des Notlaufschlauchs verriegelt ist. Eine weitere Aufgabe besteht darin, ein Fahrzeugrad, insbesondere ein Fahrzeugrad eines LKW, zu schaffen, bei dem eine derartige Ventilanordnung verwendet wird.

Die Aufgabe wird mit einer Reifenventilanordnung gelöst, welche die Merkmale des Patentanspruchs 1 aufweist.

Erfindungsgemäß ist vorgesehen, dass das Ventilgehäuse des Reifenventils derart mit dem Ventilkörper verbindbar ist, dass eine Verbindung des Ventilgehäuses des Reifenventils mit dem Ventilkörper eine permanente Abdichtung und Verriegelung des Notlaufschlauchventils bewirkt.

Diese Art der Ausgestaltung der Reifenventilanordnung gemäß der Erfindung gewährleistet das Einhalten einer bestimmten Befüllreihenfolge von Notlaufschlauch und Fahrzeugluftreifen und verhindert sicher, dass Manipulationen am Ventil des Notlaufschlauches nach dem Befüllen durchgeführt werden können.

Wie sonst bei der Montage von Fahrzeugrädern üblich, wird zunächst der Ventilkörper mit der Felge verbunden, d. h. der Ventilkörper wird in die Felge eingepresst oder mit dieser verschraubt, je nach Art des Ventilkörpers. Anschließend wird der Notlaufschlauch auf die Felge aufmontiert und mit der Luftleitung des Ventilkörpers verbunden, wobei es auch möglich ist, dass der Ventilkörper bereits vor der Montage des Notlaufschlauchs auf der Felge mit diesem verbunden wurde, beispielsweise durch Anvulkanisieren des Ventilkörpers am Notlaufschlauch. Anschließend wird der Fahrzeugluftreifen auf die Felge aufmontiert, wobei vor der Montage des Fahrzeugluftreifens gemäß einer vorteilhaften Ausgestaltung der Erfindung noch vorgesehen sein kann, dass ein Reifendrucksensor zur Reifendrucküberwachung mit dem Ventilkörper verbunden werden kann.

Danach wird durch das Notlaufschlauchventil und durch die Leitung des Notlaufschlauches Luft in den Notlaufschlauch bis zum Erreichen eines vorbestimmten Luftdrucks gepumpt. Hierbei schmiegt sich der Notlaufschlauch an die Felge und an den Wulstbereich des Fahrzeugluftreifens an.

Anschließend wird das Ventilgehäuse mit dem Ventil des Fahrzeugluftreifens mit dem Ventilkörper verbunden, was auf verschiedene geeignete Weisen geschehen kann. Beispielsweise kann, was gemäß einer vorteilhaften Ausgestaltung der Erfindung vorgesehen ist, das Ventilgehäuse als von einer Seite offene Schraubkappe ausgebildet sein, welche mit dem Ventilkörper verschraubbar ist.
Nach dem Verbinden des Ventilgehäuses des Reifenventils mit dem Ventilkörper kann das Ventil des Notlaufschlauches nicht mehr betätigt werden, d. h., in diesem Zustand ist das Ventil des Notlaufschlauches verriegelt und nicht mehr ohne größere Eingriffe zugänglich. Nunmehr wird der Fahrzeugluftreifen über das Reifenventil und die mit diesen verbundenen Luftleitungen gefüllt.

Sollte nach längerem Betrieb das Notlaufschlauchventil einmal undicht werden und Luft entweichen lassen, so würde diese Luft nicht in die Atmosphäre gelangen können, da das Ventilgehäuse als zusätzliche Dichtung fungiert und dafür sorgt, dass diese entweichende Luft nur über die Zuleitung des Fahrzeugluftreifens in diesen einströmen könnte.

Dies insbesondere, wenn gemäß praktischen Ausgestaltungen der Erfindung vorgesehen ist, dass wenigstens eine Luftleitung des Fahrzeugluftreifens koaxial zur Luftleitung des Notlaufschlauchs durch den Ventilkörper geführt ist, und dass die Luftleitung des Fahrzeugluftreifens einen oberen Lufteinlass im Bereich des felgenäußeren Ende des Ventilschaftes und einen unteren Auslass am felgeninneren Ende des Venitlfußes aufweist. Zwar würde dann der notwendige Differenzdruck für die Klemmung des Notlaufschlauchs auf der Felge reduziert, immerhin würde aber diese dem Notlaufschlauch entströmende Luft zu einer Luftdruckerhöhung im Fahrzeugreifen führen, was in Verbindung mit einem Luftdrucküberwachungssystem dem Fahrer des Fahrzeuges angezeigt werden würde. Da eine Luftdruckerhöhung im Betriebszustand eigentlich nur auf einen Luftdruckverlust im Notlaufschlauch zurückgeführt werden kann, würde dies dem Fahrer einen Hinweis darauf geben, dass das Notlaufschlauchventil oder der Notlaufschlauch selbst ausgetauscht werden müssten. Theoretisch wäre es nun denkbar, dass er das Ventil des Notlaufschlauches selbst manipulieren könnte, indem er einfach das Ventilgehäuse des Reifenventils vom Ventil-körper entfernt. Da die Luftleitungen zum Fahrzeugreifen aber vorzugsweise eine obere offene Mündung aufweisen, würde ein Entfernen des Ventilgehäuses zum vollständigen Entleeren der Luft aus dem Fahrzeugreifen führen. Es kann davon ausgegangen werden, dass der Fahrer einen solchen Fall tunlichst vermeiden wird.

Gemäß weiteren Ausgestaltungen der Erfindung kann vorgesehen sein, dass das Notlaufschlauchventil und/oder das Reifenventil durch einen Ventileinsatz gemäß der Norm DIN 7757 gebildet werden; es kann vorgesehen sein, dass der Ventilkörper einen Sockel mit Ventilfuß aufweist, welcher mit der Felge verbindbar ist, wobei des Weiteren vorgesehen sein kann, dass der Sockel als Schraubhülse mit Innengewinde und gemäß einer Weitergestaltung mit Außengewinde versehen sein kann, auf welche das als Schraubkappe ausgebildete Ventilgehäuse aufschraubbar ist.

Gemäß einer besonders bevorzugten Ausgestaltung der Erfindung ist vorgesehen, dass das Ventilgehäuse des Reifenventils ein erstes Ende mit einer Bohrung aufweist, in welches ein das Reifenventil bildender Ventileinsatz eingesetzt ist, und wobei das Ventilgehäuse ein zweites Ende aufweist, welches dichtend mit dem Ventilkörper verbindbar ist, wobei eine Betätigung des Reifenventils das Notlaufschlauchventil unbeeinflusst lässt.

Ein erfindungsgemäßes Fahrzeugrad, insbesondere ein Fahrzeugrad eines LKW, besteht aus einem auf einer Felge montierbaren, mit einem Luftdruck von 2 bis 12 bar befüllbaren Fahrzeugluftreifen, und aus einem koaxial um die Felge und im Innenraum des Fahrzeugreifens angeordneten, mit einem Luftdruck von 2 bis 13 bar befüllbaren Notlaufstützschlauch, wobei Fahrzeugreifen und Notlaufstützschlauch durch eine Reifenventilanordnung mit Luft befüllbar sind, wobei die Reifenventilanordnung durch eine Öffnung in der Felge an den Innenraum des Fahrzeugluftreifens und an den Innenraum des Notlaufstützschlauchs angeschlossen ist, wobei sich das Fahrzeugrad dadurch auszeichnet, dass die Reifenventilanordnung aus einem Notlaufschlauchventil und einem zum Notlaufschlauchventil beabstandeten Reifenventil besteht, wobei das Notlaufschlauchventil koaxial in einem zylindrischen Ventilkörper zur Befestigung an einer Reifenfelge angeordnet ist und über wenigstens eine Luftleitung im Ventilkörper mit dem Notlaufschlauch verbunden ist, und wobei das Reifenventil über wenigstens eine weitere durch den Ventilkörper geführte Luftleitung mit dem Innenraum des Fahrzeugluftreifens verbunden ist, wobei das Reifenventil in einem separaten Ventilgehäuse gelagert ist, welches derart mit dem Ventilkörper verbindbar ist, dass eine Verbindung des Ventilgehäuses des Reifensventils mit dem Ventilkörper eine permanente Abdichtung und Verriegelung des Notlaufschlauchventils bewirkt.

Dabei kann gemäß praktischen Ausgestaltungen der Erfindung weiter vorgesehen sein, dass im Innenraum des Fahrzeugreifens ein Sensor zur Ermittlung des Reifendrucks angeordnet ist, wobei der Sensor mit einer Anzeigevorrichtung im Innenraum des Fahrzeugs verbunden ist. Dies ist besonders vorteilhaft, denn es hat sich in praktischen Versuchen gezeigt, dass ein Fahren im Notlauffall, also wenn der Fahrzeugluftreifen luftleer ist und sich die Lauffläche des Fahrzeugreifens auf dem Notlaufschlauch abstützt, der Notlauffall nicht unbedingt vom Fahrer des Fahrzeuges bemerkt wird, da der Notlaufstützschlauch einen so hohen Federungskomfort aufweist, der dem Normalfahrzustand zumindest sehr nahe kommt. Ein separater Sensor kann Veränderungen des Luftdrucks im Fahrzeugluftreifen und dem Fahrer anzeigen, so dass dieser auch ohne subjektiv spürbare Anzeichen durch Warnsignale davon in Kenntnis gesetzt wird, dass sich ein Reifen im Notlaufzustand befindet.

Gemäß weiteren praktischen Ausgestaltungen der Erfindung kann dann vorgesehen sein, dass der Sensor am Ventilkörper angebracht ist.

In einer besonders bevorzugten praktischen Ausgestaltung der Erfindung ist vorgesehen, dass der Reifen die Dimension 495/45R22.5, 455/45R22.5 oder 445/50R22.5 aufweist. Ein derartiger Reifen wird von der Anmelderin als "Supersingle" unter der Marke "SuSi" angeboten, wobei es sich um einen extrem breiten LKW-Reifen handelt, welcher eine Zwillingsbereifung ersetzen soll. Neben verbesserten Rollwiderstandseigenschaften und Gewichtsersparnis ist der "Supersingle" - Reifen schmaler als zwei Reifen in Zwillingsbauweise. Durch die Platzersparnis können durch Umorganisation von Fahrwerkskomponenten deutlich Kosten und Gewicht im Fahrwerksbereich gesenkt werden. Bei der Antriebsachs-Bereifung von Bussen kann durch eine derartige Bereifung mehr Innenraum im Fahrzeug durch schmalere Radkästen genutzt werden.

Weitere Vorteile der Erfindung werden nachfolgend in der Beschreibung anhand eines bevorzugten Ausführungsbeispiel zur Erfindung, der Zeichnung und der Patentansprüche näher beschrieben.

In der Zeichnung ist schematisch der grundsätzliche Aufbau einer bevorzugten Ausführungsform einer erfindungsgemäßen Reifenventilanordnung 1 im Längsschnitt dargestellt. Die Reifenventilanordnung 1 besteht aus einem durch eine Öffnung 2 einem nur schematisch angedeuteten Reifenfelge 3 mit Außenseite 4 und Innenseite 5 hindurchgeführten Ventilkörper 6. An einem felgenäußeren Ende 7 ist der Ventilkörper 6 als Schaft 8 mit zentraler Bohrung 9 ausgebildet, welcher als Luftleitung 10 eines in das felgenäußere Ende 7 des Ventilkörpers 6 eingeschraubten Notlaufschlauchventils 11 dient. Das Notlaufschlauchventil 11 ist als Ventileinsatz 12 gemäß DIN 7757 ausgebildet und in der Zeichnung nur schematisch angedeutet.

Der Ventilschaft 8 ist an seinem unteren Ende 13 als abgewinkeltes Anschlussstück 14 mit Anschlussstutzen 15 ausgebildet, wobei der Anschlussstuten 15 zur Verbindung mit einer geeigneten Schlauchleitung eines nicht dargestellten Notlaufstützschlauches dient.

Der Ventilschaft 8 weist neben einem Innengewinde 16 zum Einschrauben des Ventileinsatzes 12 ferner ein Außengewinde 17 auf, welches in einen als Schraubhülse 18 ausgebildeten Sockel 19 mit Ventilfuß 20 eingeschraubt ist. Die Schraubhülse 18 weist zumindest an ihrem oberen Abschnitt ein Außengewinde 21 auf, auf welches eine Mutter 22 aufgeschraubt ist. Mit der Mutter 22 wird der Sockel 19 und damit der Ventilkörper 6 an der Felge 3 befestigt und gegen die Felge 3 abgedichtet. Zur zusätzlichen Abdichtung ist in eine Ringnut 23 des Ventilfußes 20 ein Gummiring 24 eingesetzt.

Im gezeigten Ausführungsbeispiel besteht der Ventilkörper 6 also aus dem Ventilschaft 8 mit Anschlussstück 14, dem Sockel 19 und der Mutter 22, welche jeweils aus Metall bestehen. Es ist aber auch denkbar, den Ventilschaft 8 mit Anschlussstück 14 in einen einstückigen Sockel mit Ventilfuß aus Gummi einzubetten, wie dies von herkömmlichen Reifenventilen her bekannt ist.

Nach dem Befestigen des Ventilkörpers 6 an der Felge 3 wird die entsprechende Zuleitung des Notlaufstützschlauches mit dem Anschlussstück 13 verbunden; anschließend wird der in der Zeichnung nicht dargestellte Fahrzeugreifen auf die Felge aufmontiert. Nun wird auf das felgenäußere Ende 7 des Ventilskörpers 6 ein herkömmliches Luftdruckgerät aufgesetzt, welches bewirkt, dass der in der Zeichnung nur angedeutete Ventilstift 25 des Ventileinsatzes 12 niedergedrückt und damit die Leitung 9 zum Notlaufstützschlauch freigegeben wird. Nunmehr wird Luft bis zum Erreichen eines vorgegebenen Druckes, beispielsweise 9 bar, in den Notlaufstützschlauch eingepumpt. Sobald das Luftbefüllgerät vom Ventileinsatz 12 entfernt wird, schließt das Notlaufschlauchventil 11 die Leitung 9 wieder ab, so dass keine Luft aus dem Notlaufstützschlauch entweichen kann. Auf das Notlaufschlauchventil 11 kann nun zur zusätzlichen Abdichtung eine Ventilkappe gemäß DIN 7757 aufgeschraubt werden.

Nachdem der Notlaufstützschlauch mit Luft befüllt wurde, wird nunmehr auf den Ventilkörper 6 ein Ventilgehäuse 26 mit einem Reifenventil 27 aufgeschraubt. Das Ventilgehäuse 26 weist ein erstes Ende 28 mit einer Gewindebohrung 29 auf, in welches das als Ventileinsatz 30 ausgebildete Reifenventil 27 eingeschraubt ist. Das Ventilgehäuse 26 weist ferner ein zweites Ende 31 auf, in welches ein Innengewinde 32 eingebracht ist, welches mit dem Außengewinde 21 des Sockels 19 verschraubt ist. Zur Abdichtung ist zwischen Stirnfläche 33 des Sockels 19 und einer Schulter 34 im Ventilgehäuse 26 ein Dichtring 35 angeordnet.

Nach dem Aufschrauben des Ventilgehäuses 26 auf den Ventilkörper 6 kann der in der Zeichnung nicht dargestellte Fahrzeugluftreifen mit Luft befüllt werden. Hierzu wird auf das als Anschlussstutzen 36 mit Außengewinde ausgebildete obere Ende 28 des Ventilgehäuses 26 ein herkömmliches Reifenbefüllgerät aufgesetzt, wodurch die Abdichtung der Bohrugng 29 durch den Ventileinsatz 27 aufgehoben wird. Wird Luft durch den Ventileinsatz 27 in das Ventilgehäuse 26 eingespeist, strömt die Luft durch Leitungen 37, 38, welche konzentrisch zur Bohrung 9 im Ventilkörper herum angeordnet sind, in das Innere des Luftreifens. Das Einspeisen von Luft durch den Ventileinsatz 27 in das Ventilgehäuse 26, durch die Leitungen 37, 38 in den Luftreifen bewirkt zwar eine Luftdruckerhöhung im Luftreifen und damit durch eine Erhöhung des Außenluftdruckes auch des Innenluftdruckes des Notlaufschlauches, lässt aber das Notlaufschlauchventil 11 selbst unbeeinflusst. Auch wenn also Luft in den Luftreifen eingespeist wird, findet keine Beeinflussung des Notlaufschlauchventils 11 statt.

Sobald also das Ventilgehäuse 26 auf den Ventilkörper 11 aufgeschraubt ist, kann nur noch der Luftreifen selbst mit Luft befüllt werden, bzw. kann Luft aus dem Fahrzeugluftreifen abgelassen werden; eine Betätigung des Notlaufschlauchventils 11 ist aber nicht möglich.

Um das Notlaufschlauchventil 11 betätigen zu können, ist es nunmehr nötig, das Ventilgehäuse 26 wieder abzuschrauben. Dies bewirkt aber ein vollständiges Entweichen von Luft aus dem Fahrzeugreifen, da dann nämlich die Leitungen 37, 38 nicht mehr durch das Ventilgehäuse 26 abgedichtet sind.

### Bezugszeichenliste

### (ist Teil der Beschreibung)

- 1: Reifenventilanordnung
- 2: Öffnung
- 3: Reifenfelge
- 4: Außenseite
- 5: Innenseite
- 6: Ventilkörper
- 7: felgenäußeres Ende
- 8: Schaft
- 9: zentrale Bohrung
- 10: Luftleitung
- 11: Notlaufschlauchventil
- 12: Ventileinsatz
- 13: unteres Ende
- 14: Anschlussstück
- 15: Anschlussstutzen
- 16: Innengewinde
- 17: Außengewinde
- 18: Schraubhülse
- 19: Sockel
- 20: Ventilfuß
- 21: Außengewinde
- 22: Mutter
- 23: Ringnut
- 24: Gummiring
- 25: Ventilstütze
- 26: Ventilgehäuse
- 27: Reifenventil
- 28: erstes Ende
- 29: Bohrung
- 30: Ventileinsatz
- 31: zweites Ende
- 32: Innengewinde
- 33: Stirnfläche
- 34: Schulter
- 35: Dichtung
- 36: Anschlussstützen mit Außengewinde
- 37: Leitung
- 38: Leitung

## Patentansprüche

1. Reifenventilanordnung (1) für einen Fahrzeugluftreifen mit Notlaufschlauch bestehend aus einem Notlaufschlauchventil (11) und einem zum Notlaufschlauchventil (11) beabstandeten Reifenventil (27), wobei das Notlaufschlauchventil (11) koaxial in einem zylindrischen Ventilkörper (6) zur Befestigung an einer Reifenfelge (3) angeordnet ist und über wenigstens eine Luftleitung (10) im Ventilkörper (6) mit dem Notlaufschlauch verbunden ist, wobei das Reifenventil (27) über wenigstens eine weitere durch den Ventilkörper (6) geführte Luftleitung (37; 38) mit dem Innenraum des Fahrzeugluftreifens verbunden ist, wobei das Reifenventil (27) in einem separaten Ventilgehäuse (26) gelagert ist und wobei das Ventilgehäuse (26) lösbar mit dem Ventilkörper (6) verbindbar ist,
**dadurch gekennzeichnet,**
**dass** in einem Teilmontagezustand der Ventilanordnung (1), bei dem nur der Ventilkörper (6) mit der Felge (3) verbunden ist, alleinig der Notlaufschlauch bis zum Erreichen eines vorbestimmten Luftdrucks befüllbar ist,
**dass** anschließend in einem Endmontagezustand, bei dem das Ventilgehäuse (26) des Reifenventils (27) mit dem Ventilkörper (6) verbunden ist, der Fahrzeugluftreifen über das Reifenventil (27) befüllbar ist,
so dass durch die Verbindung des Ventilgehäuses (26) des Reifenventils (27) mit dem Ventilkörper (6) im Endmontagezustand eine permanente Abdichtung und Verriegelung des Notlaufschlauchventils (11) bewirkt ist.

2. Reifenventilanordnung nach Anspruch 1, **dadurch gekennzeichnet, dass** der Ventilkörper (6) wenigstens an einem oberen, felgenäußeren Ende (7) einen Ventilschaft (8) mit einer zentralen, die Luftleitung (10) zum Notlaufschlauch bildenden Bohrung (9) aufweist, wobei in den Ventilschaft (8) ein das Ventil (11) des Notlaufschlauchs bildender Ventileinsatz (12) gemäß DIN 7757 eingeschraubt ist, und wobei der Ventilkörper (11) einen Sockel (19) mit Ventilfuß (20) aufweist, welcher mit der Felge (3) verbindbar ist.

3. Reifenventilanordnung nach Anspruch 1 oder 2, **d. g., dass** die wenigstens eine Luftleitung (37; 38) des Fahrzeugluftreifens koaxial zur Luftleitung (10) des Notlaufschlauchs durch den Ventilkörper (6) geführt ist, und das die Luftleitung (37; 38) des Fahrzeugluftreifens einen oberen Lufteinlaß im Bereich des felgenäußeren Ende (7) des Ventilschaftes (8) und einen unteren Auslaß am felgeninneren Endes des Ventilfußes (20) aufweist.

4. Reifenventilanordnung nach Anspruch 2 oder 3, **dadurch gekennzeichnet, dass** der Sockel (19) als Schraubhülse (18) mit Innengewinde ausgebildet ist, welches mit einem Außengewinde (17) des Ventilschaftes (8) verschraubbar ist.

5. Reifenventilanordnung nach Anspruch 4, **dadurch gekennzeichnet, dass** die wenigstens eine Luftleitung (37; 38) des Fahrzeugreifens als das Außengewinde (17) des Ventilschaftes (8) unterbrechende Nut ausgestaltet ist.

6. Reifenventilanordnung nach einem der Ansprüche 1-5, **dadurch gekennzeichnet, dass** der Ventilkörper (6) wenigstens an seinem felgenäußeren oberen Ende (7) mit einem Außengewinde (21) zur Verbindung mit dem Ventilgehäuse (26) des Reifenventils (27) versehen ist.

7. Reifenventilanordnung nach einem der Ansprüche 1-6, **dadurch gekennzeichnet, dass** das Ventilgehäuse (26) des Reifenventils (27) ein erstes Ende (28) mit einer Bohrung (29) aufweist, in welches ein das Reifenventil (27) bildender Ventileinsatz (30) eingesetzt ist, und wobei das Ventilgehäuse (26) ein zweites Ende (31) aufweist, welches dichtend mit dem Ventilkörper verbindbar ist, wobei eine Betätigung des Reifenventils (27) das Notlaufschlauchventil (11) unbeeinflußt läßt.

8. Reifenventilanordnung nach einem der Ansprüche 1-7, **dadurch gekennzeichnet, dass** das Ventilgehäuse (26) als im zweiten Ende (31) offene Schraubkappe ausgebildet ist, welche mit dem Ventilkörper (6) verschraubbar ist.

9. Reifenventilanordnung nach wenigstens einem der Ansprüche 4-8, **dadurch gekennzeichnet, dass** die Schraubkappe auf ein Außengewinde (21) der Schraubhülse aufschraubbar ist.

10. Reifenventilanordnung nach wenigstens einem der Ansprüche 1-9, **dadurch gekennzeichnet, dass** das Reifenventil (27) ein Ventileinsatz (30) gemäß DIN 7757 ist.

11. Reifenventilanordnung nach wenigstens einem der Ansprüche 1 - 10, **dadurch gekennzeichnet, dass** die Anzahl der Luftleitungen (37, 38) des Fahrzeugluftreifens zwischen 2 und 10 beträgt.

12. Fahrzeugrad, insbesondere Fahrzeugrad eines LKW, bestehend aus einem auf einer Felge (3) montierbaren, mit einem Luftdruck von 2-12 bar befüllbaren Fahrzeugluftreifen, und aus einem koaxial um die Felge (3) und im Innenraum des Fahrzeugreifens angeordneten, mit einem Luftdruck von 2-13 bar befüllbaren Notlaufstützschlauch, wobei Fahrzeugreifen und Notlaufstützschlauch durch eine Reifenventilanordnung (1) mit Luft befüllbar sind, wobei die Reifenventilanordnung (1) durch eine Öffnung (2) in der Felge (3) an den Innenraum des Fahrzeugluftreifens und an den Innenraum des Notlaufstützschlauchs angeschlossen ist, **gekennzeichnet durch** eine Reifenventilanordnung gemäß Anspruch 1.

13. Fahrzeugrad nach Anspruch 12, **dadurch gekennzeichnet, dass** im Innenraum des Fahrzeugreifens ein Sensor zur Ermittelung des Reifendrucks angordnet ist, wobei der Sensor mit einer Anzeigevorrichtung im Innenraum des Fahrzeugs verbunden ist.

14. Fahrzeugrad nach Anspruch 13, **dadurch gekennzeichnet, dass** der Sensor am Ventilkörper (6) angebracht ist.

15. Fahrzeugrad nach wenigstens einem der Ansprüche 12 - 14, **dadurch gekennzeichnet, dass** der Reifen die Dimension 495/45R22.5, 455/45R22.5 oder 445/50R22.5 aufweist.

## Claims

1. Tyre valve arrangement (1) for a vehicle pneumatic tyre with an emergency inner-tube comprising an emergency inner-tube valve (11) and a tyre valve (27) spaced apart from the emergency inner-tube valve (11), with the emergency inner-tube valve (11) being arranged coaxially in a cylindrical valve body (6) for mounting on a tyre rim (3) and connected by means of at least one air line (10) in the valve body (6) to the emergency inner-tube, with the tyre valve (27) being connected to the interior of the vehicle tyre by at least one further air line (37; 38) that passes through the valve body (6), with the tyre valve (27) being mounted in a separate valve housing (26) and with the valve housing (26) being detachably connected to the valve body (6),
**characterized**
**in that**, in a partially assembled state of the valve arrangement (1) with only the valve body (6) being connected to the rim (3), the emergency inner-tube alone can be filled to a predetermined air pressure,
**in that**, in a final assembled state with the valve housing (26) of the tyre valve (27) connected to the valve body (6), the vehicle pneumatic tyre alone can then be filled through the tyre valve (27),
so that the connection of the valve housing (26) of the tyre valve (27) to the valve body (6) provides a permanent seal and locking of the emergency inner-tube valve (11) in the final assembled state.

2. Tyre valve arrangement according to Claim 1, **characterized in that** the valve body (6) has at least one valve stem (8) at a top end (7) outside the rim with a central bore (9) forming the air line (10) to the emergency inner-tube, with a valve insert (12) according to DIN 7757 forming the valve (11) of the emergency inner-tube being screwed into the valve stem (8) and with the valve body (11) having a cap (19) with a valve base (20) that can be connected to the rim (3).

3. Tyre valve arrangement according to Claim 1 or 2, **characterized in that** at least one air line (37; 38) of the vehicle pneumatic tyre is routed coaxially through the valve body (6) relative to the air line (10) of the emergency inner-tube, and **in that** the air line (37; 38) of the vehicle pneumatic tyre has a top air inlet in the area of the end (7) outside the rim of the valve stem (8) and a bottom outlet at the end of the rim inside valve base (20).

4. Tyre valve arrangement according to Claim 2 or 3, **characterized in that** the cap (19) is formed as a threaded sleeve (18) with an internal thread that engages with an external thread (17) on the valve stem (8).

5. Tyre valve arrangement according to Claim 4, **characterized in that** at least one air line (37; 38) of the vehicle tyre is formed as a groove which interrupts the external thread (17) on the valve stem (8).

6. Tyre valve arrangement according to one of Claims 1 to 5, **characterized in that** the valve body (6) is provided at least at its top end (7) outside the rim with an external thread (21) for connecting to the valve housing (26) of the tyre valve (27).

7. Tyre valve arrangement according to one of Claims 1 to 6, **characterized in that** the valve housing (26) of the tyre valve (27) has a bore (29) at its first end (28), in which a valve insert (30) forming the tyre valve (27) is inserted, and with the valve housing (26) having a second end (31) that can be connected to the valve body forming a seal, with the emergency inner-tube valve (11) being uninfluenced by operation of the tyre valve (27).

8. Tyre valve arrangement according to one of Claims 1 to 7, **characterized in that** the valve housing (26) is formed as an open screw cap in the second end (31) that can be screwed to the valve body (6).

9. Tyre valve arrangement according to at least one of Claims 4 - 8, **characterized in that** the screw cap can be screwed to an external thread (21) on the threaded sleeve.

10. Tyre valve arrangement according to at least one of Claims 1 - 9, **characterized in that** the tyre valve (27) is a valve insert (30) according to DIN 7757.

11. Tyre valve arrangement according to at least one of Claims 1 - 10, **characterized in that** the number of air lines (37, 38) for the vehicle pneumatic tyre is between 2 and 10.

12. Vehicle wheel, especially a vehicle wheel for a lorry, comprising a vehicle pneumatic tyre that can be mounted on a rim (3) and filled to an air pressure of 2 - 12 bar, and an emergency-running auxiliary tube arranged coaxially around the rim (3) and within the vehicle tyre that can be filled to an air pressure of 2 - 13 bar, with the vehicle tyre and the emergency-running auxiliary tube being filled with air through a tyre valve arrangement (1), with the tyre valve arrangement (1) being connected through an opening (2) in the rim (3) to the interior of the vehicle pneumatic tyre and to the interior of the emergency-running auxiliary tube,
**characterized by** a tyre valve arrangement according to Claim 1.

13. Vehicle wheel according to Claim 12, **characterized in that** a sensor for determining the tyre pressure is arranged in the interior of the vehicle tyre, with the sensor being connected to an indicating device in the interior of the vehicle.

14. Vehicle wheel according to Claim 13, **characterized in that** the sensor is mounted on the valve body (6).

15. Vehicle wheel according to at least one of Claims 12 - 14, **characterized in that** the tyre size is 495/45R22.5, 455/45R22.5 or 445/50R22.5.

## Revendications

1. Agencement (1) de soupape de bandage pour un bandage pneumatique de véhicule qui présente une chambre à air qui permet de rouler après une crevaison, constitué d'une soupape (11) de chambre à air qui permet de rouler après la crevaison et une soupape de bandage (27) située à distance de la soupape (11) de chambre à air qui permet de rouler après crevaison, la soupape (11) de la chambre à air qui permet de rouler après crevaison étant disposée coaxialement dans un corps cylindrique de soupape (6) en vue d'être fixée à une jante (3) de bandage et étant reliée à la chambre à air qui permet de rouler après crevaison par au moins un conduit d'air (10) ménagé dans le corps (6) de soupape, la soupape (27) de bandage étant reliée par au moins un autre conduit d'air (37; 38) qui traverse le corps (6) de soupape à l'espace intérieur du bandage pneumatique de véhicule, la soupape de bandage (27) étant montée dans un boîtier de soupape (26) séparé, le boîtier de soupape (26) pouvant être relié de manière libérable au corps (6) de la soupape,
**caractérisé en ce que** lorsque l'agencement (1) de soupape est monté partiellement et que seul le corps (6) de la soupape est relié à la jante (3), seule la chambre à air qui permet de rouler après crevaison peut être remplie jusqu'à atteindre une pression d'air prédéterminée,
**en ce qu'**ensuite, dans une position finale de montage dans laquelle le boîtier (26) de la soupape (27) du bandage est relié au corps (6) de la soupape, le bandage pneumatique du véhicule peut être rempli par la soupape (27) du bandage de telle sorte que par la liaison du boîtier (26) de la soupape (27) du bandage avec le corps (6) de la soupape, on obtient en position de montage final une étanchéité et un blocage permanents de la soupape (11) de la chambre à air qui permet de rouler après crevaison.

2. Agencement de soupape de bandage selon la revendication 1, **caractérisé en ce qu'**au moins à une extrémité supérieure (7) située à l'extérieur de la jante, le corps de soupape (6) présente une tige (8) de soupape dotée d'un alésage central (9) qui forme le conduit d'air (10) vers la chambre à air qui permet de rouler après crevaison, un siège de soupape (12) selon DIN 7757, qui forme la soupape (11) de la chambre à air qui permet de rouler après crevaison étant vissé dans la tige de soupape (8), le corps de soupape (11) présentant un socle (19) doté d'un pied de soupape (20) qui peut être relié à la jante (3).

3. Agencement de soupape de bandage selon les revendications 1 ou 2, **caractérisé en ce que** le ou les conduits d'air (37; 38) du bandage pneumatique de véhicule traversent le corps de soupape (6) coaxialement par rapport au conduit d'air (10) de la chambre à air qui permet de rouler après crevaison et **en ce que** le conduit d'air (37; 38) du bandage pneumatique du véhicule présente une entrée supérieure d'air, située dans la zone de l'extrémité (7) et à l'extérieur de la jante, de la tige de soupape (8) et une sortie inférieure située à l'extrémité, située à l'intérieur de la jante, du pied de soupape (20).

4. Agencement de soupape de bandage selon les revendications 2 ou 3, **caractérisé en ce que** le socle (19) est configuré comme manchon fileté (18) à filet intérieur qui peut être vissé sur un filet extérieur (17) de la tige de soupape (8).

5. Agencement de soupape de bandage selon la revendication 4, **caractérisé en ce que** le ou les conduits d'air (37; 38) du bandage de véhicule sont configurés comme rainures qui interrompent le filet extérieur (17) de la tige de soupape (8).

6. Agencement de soupape de bandage selon l'une des revendications 1 à 5, **caractérisé en ce qu'**au moins à son extrémité supérieure (7) située à l'extérieur de la jante, le corps de soupape (6) est doté d'un filet extérieur (21) qui permet de le relier au boîtier (26) de la soupape (27) du bandage.

7. Agencement de soupape de bandage selon l'une des revendications 1 à 6, **caractérisé en ce que** le boîtier (26) de la soupape (27) du bandage présente une première extrémité (28) dotée d'un alésage (29) dans lequel un siège de soupape (30) qui forme la soupape (27) du bandage est inséré, le boîtier (26) de la soupape présentant une deuxième extrémité (31) qui peut être reliée de manière étanche au corps de soupape, l'actionnement de la soupape (27) du bandage n'influençant pas la soupape (11) de la chambre à air qui permet de rouler après crevaison.

8. Agencement de soupape de bandage selon l'une des revendications 1 à 7, **caractérisé en ce que** le boîtier (26) de la soupape est configuré comme bonnet fileté ouvert à sa deuxième extrémité (31) et apte à être vissé sur le corps de soupape (6).

9. Agencement de soupape de bandage selon au moins l'une des revendications 4 à 8, **caractérisé en ce que** le bonnet fileté peut être vissé sur un filet extérieur (21) de la douille filetée.

10. Agencement de soupape de bandage selon au moins l'une des revendications 1 à 9, **caractérisé en ce que** la soupape (27) du bandage est une garniture de soupape (30) selon DIN 7757.

11. Agencement de soupape de bandage selon au moins l'une des revendications 1 à 10, **caractérisé en ce que** le nombre des conduits d'air (37, 38) du bandage pneumatique de véhicule est compris entre 2 et 10.

12. Roue de véhicule, en particulier roue de camion, constituée d'un bandage pneumatique de véhicule qui peut être monté sur une jante (3) et rempli d'air à une pression de 2 à 12 bars, et d'une chambre à air qui permet de rouler après crevaison, disposée coaxialement autour de la jante (3) et dans l'espace intérieur du bandage du véhicule et qui peut être remplie à une pression d'air de 2 à 13 bars, le bandage de véhicule et la chambre à air qui permet de rouler après crevaison pouvant être remplis d'air à l'aide d'un agencement (1) de soupape de bandage, l'agencement (1) de soupape de bandage étant raccordé par une ouverture (2) ménagée dans la jante (3) à l'espace intérieur du bandage pneumatique du véhicule et à l'espace intérieur de la chambre à air qui permet de rouler après crevaison,
**caractérisé par** un agencement de soupapes de bandage selon la revendication 1.

13. Roue de véhicule selon la revendication 12, **caractérisée en ce qu'**un détecteur de détection de la pression du bandage est disposée dans l'espace intérieur du bandage de véhicule, le détecteur étant relié à un dispositif d'affichage prévu dans l'habitacle du véhicule.

14. Roue de véhicule selon la revendication 13, **caractérisée en ce que** le détecteur est installé sur le corps de soupape (6).

15. Roue de véhicule selon au moins l'une des revendications 12 à 14, **caractérisée en ce que** le bandage présente les dimensions 495/45R22.5, 455/45R22.5 ou 445/50R22.5.
